# EUROPEAN PATENT APPLICATION

(11) **EP 3 970 894 A1**
(43) Date of publication of application: **23.03.2022**
(21) Application number: 21194401.2
(22) Date of filing: 01.09.2021
(51) Int. Cl.: B23K 9/013, B23K 9/10

(54) **SYNERGIC AIR COMPRESSOR FOR GOUGING IN A MULTI-FUNCTION MACHINE**

(30) Priority: 01.09.2020 US 202017008791
(71) Applicant: Lincoln Global, Inc., Santa Fe Springs, CA 90670 (US)
(72) Inventor: MILLER, ERIK C., MENTOR, 44060 (US); ENYEDY, EDWARD A., EASTLAKE, 44095 (US)
(74) Representative: Hoyng Rokh Monegier B.V.

(57) **Abstract**

A multi-function machine is provided. In one embodiment, the multi-function machine includes a generator (150) driven by an engine (160) for generating electrical power. The multi-function machine also includes a welding power supply (170) electrically powered by the generator to provide an arc gouging output during an arc gouging process when the multi-function machine is in an arc gouging mode. The multi-function machine further includes an air compressor system (110) driven by the generator to provide a compressed air output to support the arc gouging process. The multi-function machine also includes a controller operatively connected to the welding power supply and the air compressor system. The air compressor system is commanded by the controller to activate to provide the compressed air output when the arc gouging mode is selected and/or change a characteristic of the compressed air output when an arc gouging set point of the arc gouging mode is changed.

## Description

### FIELD

Embodiments of the present invention relate to multi-function machines having an air compressor. More specifically, embodiments of the present invention relate to multi-function machines having an air compressor used in a gouging process.

### BACKGROUND

Multi-function machines exist that are capable of providing welding, auxiliary power, battery charging/jumping, and hydraulic pumping. As the capabilities of the machines increase, the user interface tends to become more complicated. With respect to a multi-function machine providing arc gouging capability, a simplified operation is desired which provides more consistent results and less chance of an operator using incorrect settings. One example of a conventional multi-function machine is disclosed in U.S. Patent No. 7,105,774 issued on September 12, 2006, which is incorporated herein by reference in its entirety.

### SUMMARY

Embodiments of multi-function machines (e.g., multi-function engine arc welding machines) providing synergic air compression for arc gouging are disclosed. Such a multi-function machine may also provide capabilities for welding, auxiliary power, battery charging and/or jumping, and hydraulic pumping, for example. In one embodiment, an air compressor system is an integral part of the multi-function machine and supports at least an arc gouging capability. The multi-function machine is configured to improve reliability and simplify operation such that there is less chance of an operator using the wrong settings and a better chance of providing consistent results.

One embodiment is a multi-function machine having a generator driven by an engine, for generating at least electrical power, and a welding power supply electrically powered by the generator to provide an arc gouging output during an arc gouging process when the multi-function machine is in an arc gouging mode. The multi-function machine also includes an air compressor system driven by the generator to provide a compressed air output to support the arc gouging process. The multi-function machine further includes a controller operatively connected to at least the welding power supply and the air compressor system. The air compressor system is commanded by the controller to activate to provide the compressed air output when the arc gouging mode is selected on the multi-function machine. In one embodiment, the air compressor system is commanded by the controller to deactivate when a different welding mode is selected on the multi-function machine. In one embodiment, the multi-function machine includes a user interface configured to allow a user to communicate with at least the controller of the multi-function machine. In one embodiment, the controller calculates a number of revolutions per minute (rpm) required of the engine based on at least a combination of selected arc gouging mode characteristics and selected air compressor system characteristics communicated to the controller. The controller is operatively connected to the engine and changes a speed of the engine based on the number of revolutions per minute (rpm) as calculated. In one embodiment, the controller calculates a number of horsepower required of the engine based on at least a combination of selected arc gouging mode characteristics and selected air compressor system characteristics communicated to the controller. The controller is operatively connected to the engine and changes a speed of the engine based on the number of horsepower as calculated. In one embodiment, the welding power supply provides a welding output during a welding process when the multi-function machine is in a welding mode. In one embodiment, the generator provides at least one auxiliary power output. In one embodiment, at least one of a pressure level or a flow rate of the compressed air output is lower during the arc gouging process than when not in the arc gouging process. One embodiment includes a clutch and belt assembly that is mounted to the generator. A belt of the clutch and belt assembly interfaces between the clutch and belt assembly and a portion of the air compressor system. The air compressor system is driven by the generator via the clutch and belt assembly when the clutch and belt assembly is engaged. In one embodiment, an electric motor is operatively connected between the generator and the air compressor system. The air compressor system is driven by the generator via the electric motor. In one embodiment, an arc gouging tool (e.g., a carbon electrode) is operatively connected to the welding power supply and used during the arc gouging process.

One embodiment is a multi-function machine having a generator driven by an engine, for generating at least electrical power, and a welding power supply electrically powered by the generator to provide an arc gouging output during an arc gouging process when the multi-function machine is in an arc gouging mode. The multi-function machine also includes an air compressor system driven by the generator to provide a compressed air output to support the arc gouging process. The multi-function machine further includes a controller operatively connected to at least the welding power supply and the air compressor system. The air compressor is commanded by the controller to change a characteristic of the compressed air output when an arc gouging set point of the arc gouging mode is changed on the multi-function machine. In accordance with one embodiment, the characteristic of the compressed air output is one of a pressure level or a flow rate. The arc gouging set point corresponds to at least one of a number of arc gouging amps, a number of arc gouging volts, a number of arc gouging kilo-watts, an arc gouging tool size, or an arc gouging tool shape, in accordance with one embodiment. In one embodiment, the multi-function machine includes an arc gouging tool (e.g., a carbon electrode) operatively connected to the welding power supply and is used during the arc gouging process. The air compressor system is commanded by the controller to change a characteristic of the compressed air output based on at least one characteristic of the arc gouging tool communicated to the controller. In one embodiment, the welding power supply provides a welding output during a welding process when the multi-function machine is in a welding mode. The generator provides at least one auxiliary power output, in accordance with one embodiment. In one embodiment, at least one of a pressure level or a flow rate of the compressed air output is lower during the arc gouging process than when not in the arc gouging process. In one embodiment, the controller calculates a number of revolutions per minute (rpm) required of the engine based on at least a combination of selected arc gouging mode characteristics and selected air compressor system characteristics communicated to the controller. The controller is operatively connected to the engine and changes a speed of the engine based on the number of revolutions per minute (rpm) as calculated. In one embodiment, the controller calculates a number of horsepower required of the engine based on at least a combination of selected arc gouging mode characteristics and selected air compressor system characteristics communicated to the controller. The controller is operatively connected to the engine and changes a speed of the engine based on the number of horsepower as calculated. In one embodiment, the multi-function machine includes a user interface configured to allow a user to communicate with at least the controller of the multi-function machine. The user interface includes a digital display screen, in accordance with one embodiment.

Numerous aspects of the general inventive concepts will become readily apparent from the following detailed description of exemplary embodiments, from the claims, and from the accompanying drawings.

### BRIEF DESCRIPTION OF THE DRAWINGS

The accompanying drawings, which are incorporated in and constitute a part of the specification, illustrate various embodiments of the disclosure. It will be appreciated that the illustrated element boundaries (e.g., boxes, groups of boxes, or other shapes) in the figures represent one embodiment of boundaries. In some embodiments, one element may be designed as multiple elements or that multiple elements may be designed as one element. In some embodiments, an element shown as an internal component of another element may be implemented as an external component and vice versa. Furthermore, elements may not be drawn to scale.
FIG. 1 illustrates a first view of one embodiment of a multi-function machine having an air compressor system;
FIG. 2 illustrates a second view of the multi-function machine of FIG. 1;
FIG. 3 illustrates a third view of the multi-function machine of FIG. 1;
FIG. 4 illustrates a fourth view of the multi-function machine of FIG. 1;
FIG. 5 illustrates a system block diagram of the multi-function machine of FIGS. 1-4;
FIG. 6 illustrates a flowchart of one embodiment of a method performed by the multi-function machine of FIGS. 1-5; and
FIG. 7 illustrates a block diagram of an example embodiment of a controller that can be used in the multi-function machine of FIGS. 1-5.

### DETAILED DESCRIPTION

Embodiments of the present invention include multi-function machines having integral air compressors that support arc gouging processes. As the capability of machines increase, the user interface can become more complicated. Embodiments of the multi-function machines herein are configured to improve reliability and simplify operation such that there is less chance of an operator using the wrong settings and a better chance of providing consistent results.

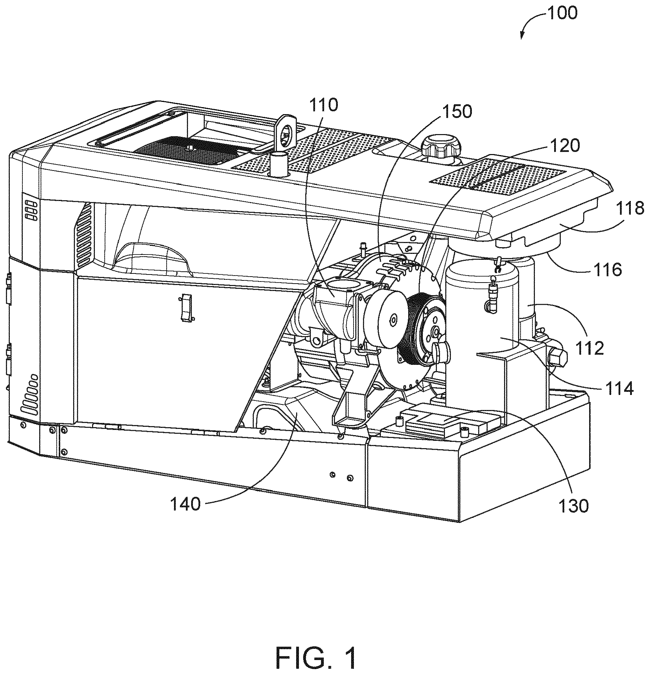

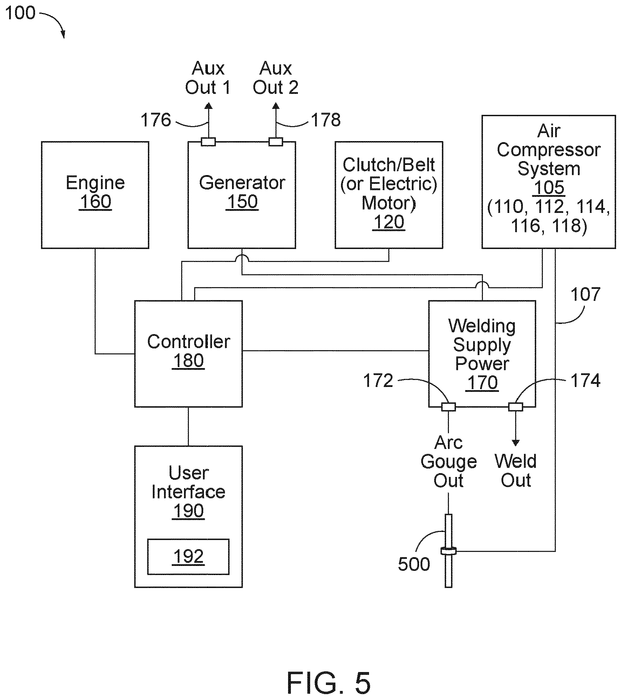

The examples and figures herein are illustrative only and are not meant to limit the subject invention, which is measured by the scope and spirit of the claims. Referring now to the drawings, wherein the showings are for the purpose of illustrating exemplary embodiments of the subject invention only and not for the purpose of limiting same, FIGS. 1-4 illustrate one embodiment of a multi-function machine 100 (e.g., an engine welding machine) having an air compressor system. FIG. 5 illustrates a system block diagram of the multi-function machine 100 of FIGS. 1-4 having an air compressor system 105. The multi-function machine 100 provides arc gouging capability, arc welding capability, auxiliary power capability, and battery charging/jumping capability, in accordance with one embodiment. The overall maximum external dimensions of the multi-function machine 100 are 20 inches wide by 26 inches tall by 48 inches long, in accordance with one embodiment. The various components of the multi-function machine 100, many of which are discussed herein, fit within those overall external dimensions. In accordance with another embodiment, the overall maximum external dimensions are 25 inches wide by 30 inches tall by 50 inches long. Other overall maximum external dimensions are possible as well, in accordance with other embodiments.

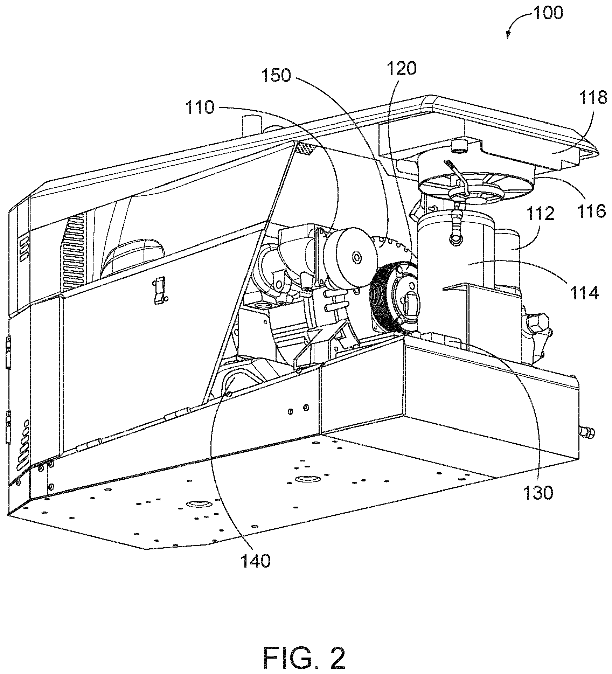

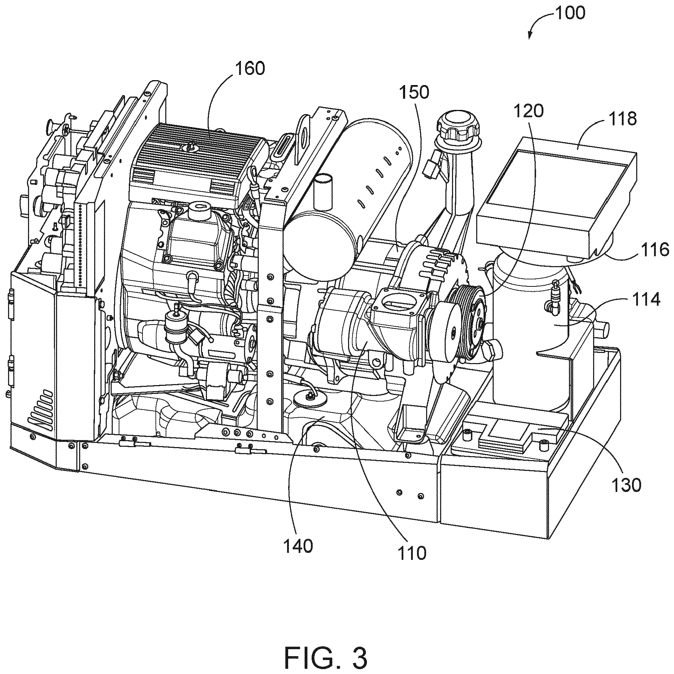

FIG. 1 illustrates a first view of one embodiment of the multi-function machine 100 having the air compressor system 105. Referring to FIG. 1, the air compressor system 105 includes an air compressor 110, an oil/air tank and filter assembly 114, an air/oil separator assembly 112, a fan 116, and an air cooler 118. The multi-function machine 100 also includes a clutch and belt assembly 120, a battery 130, a fuel tank 140, and a generator 150. FIG. 2 illustrates a second view of the multi-function machine 100 of FIG. 1 showing the same elements shown in FIG. 1. FIG. 3 illustrates a third view of the multi-function machine 100 of FIG. 1 showing the same elements shown in FIG. 1 and FIG. 2 as well as an engine 160. The engine may be a gasoline or diesel fueled engine, for example. The fuel is stored in the refillable fuel tank 140. Other types of fuels may be possible as well, in accordance with other embodiments.

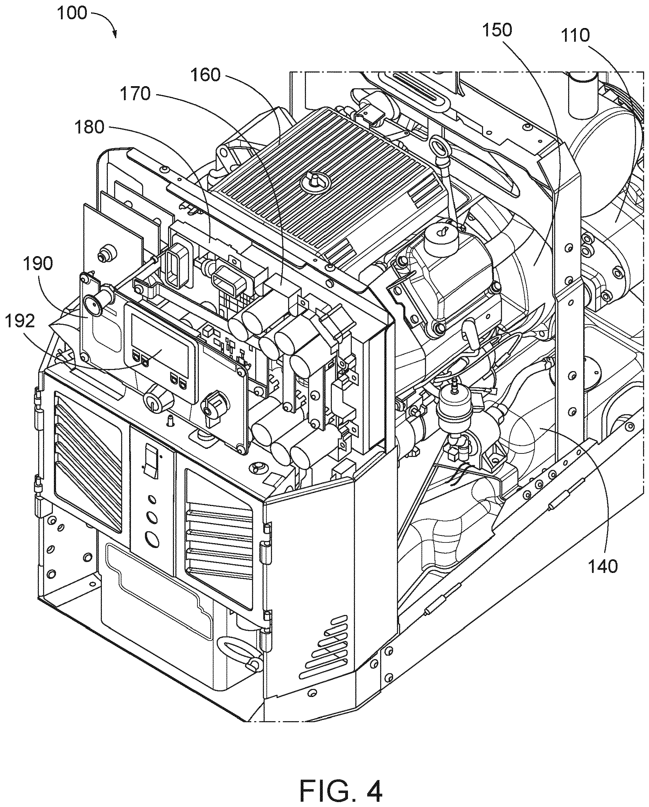

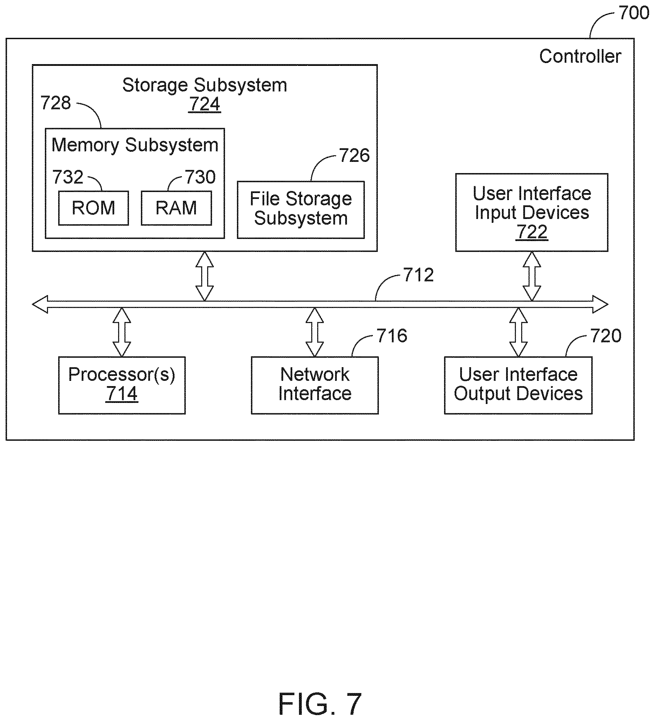

FIG. 4 illustrates a fourth view of the multi-function machine 100 of FIG. 1 showing some of the same elements of FIGS. 1-3 as well as a welding power supply 170, a controller 180, a user interface 190, and a digital display screen 192 of the user interface 190. The welding power supply 170 may be an inverter-based and/or a chopper-based welding power supply, for example, the technology of which is known in the art. The controller 180 may be the controller 700 discussed later herein with respect to FIG. 7, or some similar controller, in accordance with various embodiments. The user interface 190 may include, for example, switches, pushbuttons, and knobs and/or other similar types of devices for inputting information and making selections by communicating with the controller 180, in accordance with various embodiments. The user interface 190 may include some features of the controller 700 discussed in FIG. 7 with respect to the user interface input devices 722 and the user interface output devices 720. The digital display screen 192 may be, for example, an LCD display screen having touch screen capability in accordance with one embodiment, or a thin-film-transistor (TFT) display screen in accordance with another embodiment.

Referring to FIG. 5, in general, the engine 160 mechanically drives the generator 150. The generator 150 mechanically drives the air compressor system 105 via the clutch and belt assembly 120. The generator 150 also provides electrical power for at least the welding power supply 170. The controller 180 provides control logic and functionality to control at least the engine 160, the clutch and belt assembly 120, the air compressor system 105, and the welding power supply 170. The controller 180 is operatively connected to the user interface 190 to accept user commands and selections from the user interface 190 and to provide output information to the user interface 190. The generator 150 may also be used to provide electrical power to other parts of the multi-function machine 100 such as, for example, the controller 180 and the user interface 190. In accordance with an alternative embodiment, the engine 160 (instead of the generator 150) mechanically drives the air compressor system 105 via the clutch and belt assembly 120.

In other embodiments, the controller 180 may be distributed among one or more of the engine 160, the generator 150, the air compressor system 105, the welding power supply 170, or the user interface 190. For example, in one embodiment, one or more of the engine 160, the generator 150, the air compressor system 105, the welding power supply 170, or the user interface 190 also include one or more components of the controller 180 (e.g., elements of the controller 700 of FIG. 7). In this manner, multiple elements of the multi-function machine 100 may include at least some level of control capability.

Operation of the air compressor system 105 is described next herein. Referring to FIGS. 1-4, in one embodiment, the air compressor 110 is a rotary screw compressor that accepts an air/oil mixture from the oil/air tank and filter assembly 114 and compresses the air/oil mixture. The oil helps to seal microscopic gaps between the screws of the compressor 110 and also acts as a lubricant of the screws. The compressor 110 effectively takes a lower pressure air/oil input and outputs a higher pressure air/oil output. The higher pressure air/oil output enters the air/oil separator assembly 112 (which includes a coalescing filter) from the compressor 110, and separates the oil from the air. The oil is fed back to the oil/air tank and filter assembly 114, in accordance with one embodiment. The higher pressure air out of the air/oil separator assembly 112 tends to be relatively hot, due to the compression provided by the compressor 110, and is cooled by the fan 116 and the air cooler 118 before being passed to a tool (e.g., a gouging tool). The fan 116 and air cooler 118 act as an air-to-air heat exchanger. In this manner, the tool receiving the compressed air output is protected from much of the heat produced by the compressor 110. However, other types of air cooling (e.g., liquid-based air cooling) can be provided, in accordance with other embodiments.

Referring again to FIGS. 1-4, the clutch and belt assembly 120 is operatively connected to an end of the generator 150 and driven (e.g., mechanically spun) by the generator 150. The clutch and belt assembly 120 is located next to the air compressor 110 such that the belt of the clutch and belt assembly 120 interfaces between the clutch and belt assembly 120 and the air compressor 110. Therefore, the air compressor 110 is driven by the generator 150 via the clutch and belt assembly 120, to produce a compressed air output 107 of the air compressor system 105 (see FIG. 5), when the clutch and belt assembly 120 is engaged. In accordance with one embodiment, the clutch and belt assembly 120 is engaged/disengaged via a control signal(s) from the controller 180 to the clutch and belt assembly 120 (see FIG. 5). The clutch and belt assembly 120 may be disengaged from the compressor 110 to, for example, turn the compressor off, or when the temperature of the compressor 110 becomes too high, or when the pressure produced by the compressor 110 becomes too high. For example, the compressor 110 may be cycled on and off (engaged/disengaged) such that the compressor 110 turns off when the pressure exceeds 120 psi and turns back on when the pressure drops below 80 psi, in accordance with one embodiment. Pressure and temperature sensors may be provided to measure the pressure and temperature of the compressor 110 during operation, and provide measurements of pressure and temperature back to the controller 180.

In accordance with an alternative embodiment, the clutch and belt assembly 120 is replaced with an electric motor (not explicitly shown in FIGS. 1-4; however, see FIG. 5). In such an alternative embodiment, the electric motor is operatively connected between the generator 150 and the air compressor 110, and the air compressor 110 is driven by the generator 150 via the electric motor. That is, the generator 150 provides electricity to the electric motor, and the electric motor provides rotational motion to drive the air compressor 110. In yet another alternative embodiment, the electric motor is electrically driven by the battery 130 instead of the generator 150. In such alternative embodiments, the electric motor is engaged/disengaged via a control signal(s) from the controller 180 to the electric motor.

The battery 130 is primarily used to provide electrical power to start the engine 160 but, in some alternative embodiments could also be used to provide electrical power to an electric motor operatively connected between the generator 150 and the compressor 110 as discussed above herein. In accordance with other embodiments, the battery 130 could also be used to provide electrical power to other parts of the multi-function machine 100 such as, for example, the controller 180, the welding power supply 170, and the user interface 190. In accordance with one embodiment, electrical power from the generator 150 is used to recharge the battery 130. For example, AC electrical power from the generator 150 may be converted to DC electrical power by the welding power supply 170 and the DC electrical power from the welding power supply 170 is used to recharge the battery 130.

Referring again to FIG. 5, the welding power supply 170 receives electrical power from the generator 150 (and/or the battery 130) and is capable of producing an arc gouging output 172 and an arc welding output 174. The generator 150 is capable of producing a first auxiliary power output 176 (e.g., 120 VAC) and a second auxiliary power output 178 (e.g., 24 VDC). In an alternative embodiment, the welding power supply 170 receives electrical power from the generator 150 (and/or the battery 130) and is capable of producing the first auxiliary power output 176 and the second auxiliary power output 178. The various outputs may or may not be able to be produced all at the same time, depending on the capacity of the engine 160 and the generator 150 and the particular design of the welding power supply 170. For example, in one embodiment, the arc gouging output 172 and the first and second auxiliary power outputs 176 and 178 may be able to be produced at the same time. Similarly, the arc welding output 174 and the first and second auxiliary power outputs 176 and 178 may be able to be produced at the same time. Other combinations of simultaneous outputs are possible as well, in accordance with other embodiments. To be clear, the various outputs (arc gouging output 172, arc welding output 174, first auxiliary output 176, second auxiliary output 178) as discussed herein refer to electrical signals (e.g., an arc gouging current and voltage, an arc welding current and voltage, an alternating current and voltage, a direct current and voltage), not to, for example, physical connector outputs on the multi-function machine 100.

The controller 180 puts the welding power supply 170 in one or more of the various modes (e.g., an arc gouging mode, an arc welding mode) based on user selections via the user interface 190 and any system limitations (e.g., maybe can't select the arc gouging mode and the arc welding mode at the same time). As seen in FIG. 5, the controller 180 interfaces to and controls at least the engine 160, the clutch and belt assembly (or electric motor) 120, the air compressor system 105, the welding power supply 170, and the user interface 190. In another embodiment, the controller 180 may also control the generator 150.

For arc gouging, an arc gouging tool 500 (e.g., including a carbon or graphite electrode) is operatively connected to the welding power supply 170 to receive the arc gouging output 172. A compressed air output 107 (i.e., compressed air produced by the air compression system 105) is supplied to the arc gouging tool 500 from the air compressor system 105. In the arc gouging mode, an electric arc produced between the arc gouging tool 500 and a metal work piece melts a portion of the metal work piece as the arc gouging tool 500 is guided by an operator (e.g., a human operator or a robot). For example, the operator may desire to form (gouge out) a groove in the metal work piece. The compressed air output 107 from the air compressor system 105 is directed by the tool 500 to blow the melted metal away to form the groove. In general, arc gouging is well known in the art. One skilled in the art would know how an arc gouging operation/process is performed.

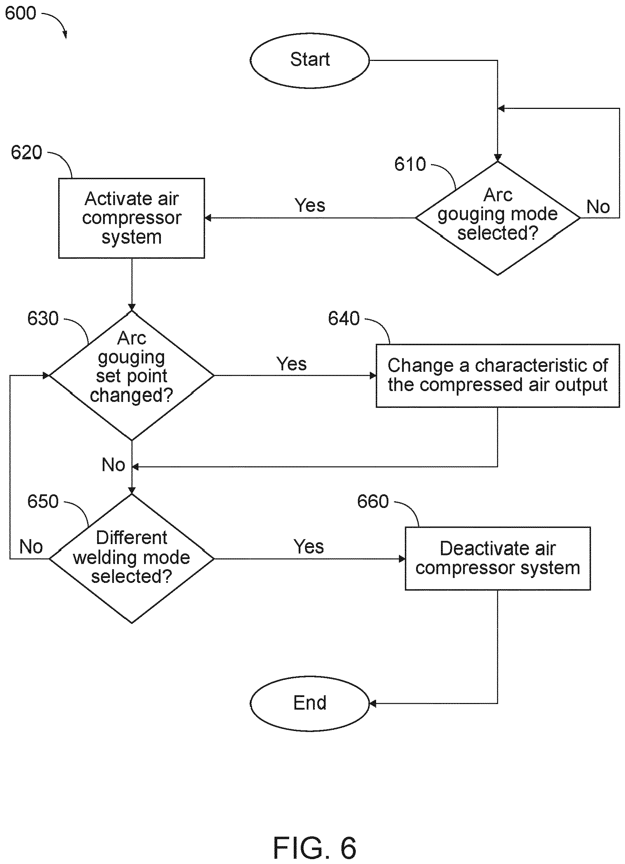

FIG. 6 illustrates a flowchart of one embodiment of a method 600 performed by the multi-function machine 100 of FIGS. 1-5. At block 610 of the method, when an arc gouging mode of the multi-function machine 100 is selected (e.g., via the user interface 190), then at block 620 the air compressor system 105 is activated (turned on), for example, by the controller 180. A change in an arc gouging set point of the multi-function machine 100 is checked for at block 630 (e.g., by the controller 180). The change may be made by, for example, a user via the user interface 190. The arc gouging set point may be, for example, a number of arc gouging amps, a number of arc gouging volts, a number of arc gouging kilo-watts, an arc gouging tool 500 size, or an arc gouging tool 500 shape. When a change has occurred, then at block 640 a characteristic of the compressed air output 107 is changed (e.g., by the controller 180). That is, there is a programmed relationship between an arc gouging set point and a characteristic of the compressed air output 107, for example, in the controller 180. The characteristic of the compressed air output 107 is one of a pressure level or a flow rate. Selection of a different welding mode is checked for at block 650 (e.g., by the controller 180). For example, the user may select a gas metal arc welding (GMAW) mode via the user interface 190, causing the multi-function machine 100 to switch from the arc gouging mode to the GMAW mode. When a different welding mode is selected, then at block 660 the air compressor system 105 is deactivated (turned off) (e.g., by the controller 180).

The arc gouging tool 500 (e.g., having a carbon/graphite electrode) is operatively connected to the welding power supply 170 to be used in an arc gouging process, as discussed with respect to FIG. 5 herein. In accordance with one embodiment, the air compressor system 105 is commanded by the controller 180 to change a characteristic of the compressed air output 107 based on at least one characteristic of the arc gouging tool 500 communicated to the controller 180. That is, there is a programmed relationship between a characteristic of the arc gouging tool 500 and a characteristic of the compressed air output 107, for example, in the controller 180. In one embodiment, a characteristic of the arc gouging tool 500 is entered via the user interface 190 by a user. In another embodiment, the characteristic of the arc gouging tool 500 is stored as data within a memory of the arc gouging tool 500 and automatically communicated to the controller 180 (e.g., directly or via the welding power supply 170). The communication may be via wired or wireless means. The characteristic of the arc gouging tool 500 may be, for example, a size and/or a shape of the arc gouging tool 500 (e.g., the size and/or shape of an electrode of the arc gouging tool). The characteristic of the compressed air output 107 that gets changed may be a pressure and/or a flow rate.

In accordance with one embodiment, when in the arc gouging mode, the controller 180 calculates a number of revolutions per minute (rpm) required of the engine 160 based on at least a combination of selected arc gouging mode characteristics and selected air compressor system characteristics communicated to the controller 180. The controller 180 is operatively connected to the engine 160 and changes a speed of the engine based on the number of revolutions per minute (rpm) required as calculated. In accordance with an alternative embodiment, when in the arc gouging mode, the controller 180 calculates a number of horsepower required of the engine 160 based on at least a combination of selected arc gouging mode characteristics and selected air compressor system characteristics communicated to the controller 180. The controller 180 is operatively connected to the engine 160 and changes a speed of the engine based on the number of horsepower required as calculated.

In one embodiment, the pressure level and/or the flow rate of the compressed air output 107 is lower during an arc gouging process than when not in an arc gouging process. For example, in one embodiment, a multi-function machine may have a 26 horsepower (hp) engine. The air compressor system may consume 9 hp to generate enough air to support arc gouging. To maintain an arc during a gouging process may require another 20 hp. The total engine load would then be 29 hp. Since this exceeds the engine capacity of 26 hp, the amount of air that the air compressor system generates is reduced until the load is only 6 hp, making the total load be 26 hp. However, this would result in a shortage of air for gouging, unless a storage or receiver air tank is available. When gouging, the air tank helps to provide air. When not gouging, the air compressor system recharges the air tank. If a user performed gouging at 100% duty cycle, then there would be an issue. However, gouging is typically a low duty cycle process. The air tank can be internal to or external to the multi-function machine, in accordance with different embodiments.

FIG. 7 illustrates a block diagram of an example embodiment of a controller 700 that can be used in the multi-function machine 100 of FIGS. 1-5. For example, in accordance with one embodiment, the controller 700 (or a least portions thereof) serves as the controller 180 in FIG. 4 and FIG. 5 herein. In other embodiments, the controller 700 (or portions thereof) may be used in or distributed among one or more of the engine 160, the generator 150, the air compressor system 105, the welding power supply 170, and the user interface 190. For example, in one embodiment, the controller 700 (or a least portions thereof) serves as the controller 180 in FIG. 4 and FIG. 5 herein, and one or more of the engine 160, the generator 150, the air compressor system 105, the welding power supply 170, or the user interface 190 also include one or more components of the controller 700. In this manner, multiple elements of the multi-function machine 100 may include at least some level of control capability.

Referring to FIG. 7, the controller 700 includes at least one processor 714 (e.g., a central processing unit, a graphics processing unit) which communicates with a number of peripheral devices via bus subsystem 712. These peripheral devices may include a storage subsystem 724, including, for example, a memory subsystem 728 and a file storage subsystem 726, user interface input devices 722, user interface output devices 720, and a network interface subsystem 716. The input and output devices allow user interaction with the controller 700. Network interface subsystem 716 provides an interface to outside networks and is coupled to corresponding interface devices in other devices.

User interface input devices 722 may include a keyboard, pointing devices such as a mouse, trackball, touchpad, or graphics tablet, a scanner, a touchscreen incorporated into the display, audio input devices such as voice recognition systems, microphones, and/or other types of input devices. In general, use of the term "input device" is intended to include all possible types of devices and ways to input information into the controller 700 or onto a communication network.

User interface output devices 720 may include a display subsystem, a printer, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from the controller 700 to the user or to another machine or computer system.

Storage subsystem 724 stores programming and data constructs that provide some or all of the functionality described herein. For example, computer-executable instructions and data are generally executed by processor 714 alone or in combination with other processors. Memory 728 used in the storage subsystem 724 can include a number of memories including a main random access memory (RAM) 730 for storage of instructions and data during program execution and a read only memory (ROM) 732 in which fixed instructions are stored. A file storage subsystem 726 can provide persistent storage for program and data files, and may include a hard disk drive, a floppy disk drive along with associated removable media, a CD-ROM drive, an optical drive, or removable media cartridges. The computer-executable instructions and data implementing the functionality of certain embodiments may be stored by file storage subsystem 726 in the storage subsystem 724, or in other machines accessible by the processor(s) 714.

Bus subsystem 712 provides a mechanism for letting the various components and subsystems of the controller 700 communicate with each other as intended. Although bus subsystem 712 is shown schematically as a single bus, alternative embodiments of the bus subsystem may use multiple buses.

The controller 700 can be of varying types. Due to the ever-changing nature of computing devices and networks, the description of the controller 700 depicted in FIG. 7 is intended only as a specific example for purposes of illustrating some embodiments. Many other configurations of the controller are possible, having more or fewer components than the controller 700 depicted in FIG. 7.

While the disclosed embodiments have been illustrated and described in considerable detail, it is not the intention to restrict or in any way limit the scope of the appended claims to such detail. It is, of course, not possible to describe every conceivable combination of components or methodologies for purposes of describing the various aspects of the subject matter. Therefore, the disclosure is not limited to the specific details or illustrative examples shown and described. Thus, this disclosure is intended to embrace alterations, modifications, and variations that fall within the scope of the appended claims. The above description of specific embodiments has been given by way of example. From the disclosure given, those skilled in the art will not only understand the general inventive concepts and attendant advantages, but will also find apparent various changes and modifications to the structures and methods disclosed.

## Claims

1. A multi-function machine, comprising:
a generator driven by an engine for generating at least electrical power;
a welding power supply electrically powered by the generator to provide an arc gouging output during an arc gouging process when the multi-function machine is in an arc gouging mode;
an air compressor system driven by the generator to provide a compressed air output to support the arc gouging process;
a controller operatively connected to at least the welding power supply and the air compressor system, wherein the air compressor system is commanded by the controller to:
- activate to provide the compressed air output when the arc gouging mode is selected on the multi-function machine;
and/or
- change a characteristic of the compressed air output when an arc gouging set point of the arc gouging mode is changed on the multi-function machine.

2. The multi-function machine of claim 1, wherein the air compressor system is commanded by the controller to deactivate when a different welding mode is selected on the multi-function machine.

3. The multi-function machine of claim 1 or 2, further comprising a user interface configured to allow a user to communicate with at least the controller of the multi-function machine, wherein the user interface preferably includes a digital display screen.

4. The multi-function machine of any of the previous claims, wherein the controller calculates a number of revolutions per minute (rpm) required of the engine based on at least a combination of selected arc gouging mode characteristics and selected air compressor system characteristics communicated to the controller, and wherein the controller is operatively connected to the engine and changes a speed of the engine based on the number of revolutions per minute (rpm) as calculated.

5. The multi-function machine of any of the previous claims, wherein the controller calculates a number of horsepower required of the engine based on at least a combination of selected arc gouging mode characteristics and selected air compressor system characteristics communicated to the controller, and wherein the controller is operatively connected to the engine and changes a speed of the engine based on the number of horsepower as calculated.

6. The multi-function machine of any of the previous claims, wherein the welding power supply further provides a welding output during a welding process when the multi-function machine is in a welding mode.

7. The multi-function machine of any of the previous claims, wherein the generator provides at least one auxiliary power output.

8. The multi-function machine of any of the previous claims, wherein at least one of a pressure level or a flow rate of the compressed air output is lower during the arc gouging process than when not in the arc gouging process.

9. The multi-function machine of any of the previous claims, further comprising a clutch and belt assembly mounted to the generator, wherein a belt of the clutch and belt assembly interfaces between the clutch and belt assembly and a portion of the air compressor system, and wherein the air compressor system is driven by the generator via the clutch and belt assembly when the clutch and belt assembly is engaged.

10. The multi-function machine of any of the previous claims, further comprising an electric motor operatively connected between the generator and the air compressor system, wherein the air compressor system is driven by the generator via the electric motor.

11. The multi-function machine of any of the previous claims, further comprising an arc gouging tool operatively connected to the welding power supply and used during the arc gouging process.

12. The multi-function machine of any of the previous claims, wherein the characteristic of the compressed air output is one of a pressure level or a flow rate.

13. The multi-function machine of any of the previous claims, wherein the arc gouging set point corresponds to at least one of a number of arc gouging amps, a number of arc gouging volts, a number of arc gouging kilo-watts, an arc gouging tool size, or an arc gouging tool shape.

14. The multi-function machine of any of the previous claims, further comprising an arc gouging tool operatively connected to the welding power supply and used during the arc gouging process, wherein the air compressor system is commanded by the controller to change a characteristic of the compressed air output based on at least one characteristic of the arc gouging tool communicated to the controller.
